(19) Europäisches Patentamt
European Patent Office
Office européen des brevets

(11) EP 4 717 684 A1

(12) EUROPEAN PATENT APPLICATION

(43) Date of publication:
**01.04.2026 Bulletin 2026/14**

(21) Application number: **24306595.0**

(22) Date of filing: **30.09.2024**

(51) International Patent Classification (IPC):
***C04B 28/14*** *(2006.01)*

(52) Cooperative Patent Classification (CPC):
(C-Sets available)
**C04B 28/145;** C04B 2111/0062; C04B 2111/00629; C04B 2111/27 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SAINT-GOBAIN PLACO**
**92400 Courbevoie (FR)**

(72) Inventors:
- **RAVET, Clement**
**93300 Aubervilliers (FR)**
- **DI MAURO, Eduardo**
**92400 Courbevoie (FR)**

(74) Representative: **Saint-Gobain Recherche**
**41 Quai Lucien Lefranc**
**93300 Aubervilliers (FR)**

# (54) METHOD FOR THE MANUFACTURE OF A MOISTURE-RESISTANT PLASTERBOARD USING SILICONE AND KETENE DIMER

(57) The present invention relates to a method for the manufacture of a moisture-resistant plasterboard, comprising :
- providing a composition comprising water, stucco, a silicone and a ketene dimer,
- casting the composition on a first liner, so as to form a wet gypsum layer on said first liner,
- providing a second liner on said wet gypsum layer, thereby forming a wet plasterboard, and
- drying the wet plasterboard, so as to form the plasterboard,

wherein the weight ratio of silicone to ketene dimer in said composition is from 1/50 to 1/1. It also relates to a moisture-resistant plasterboard made by such a method.

It also relates to a composition comprising water, stucco, a silicone and a ketene dimer, wherein the weight ratio of silicone to ketene dimer in the composition is from 1/50 to 1/1.

EP 4 717 684 A1

(52) Cooperative Patent Classification (CPC): (Cont.)

C-Sets
**C04B 28/145, C04B 20/0048, C04B 24/008,
C04B 24/38, C04B 24/42, C04B 2103/10,
C04B 2103/20, C04B 2103/58, C04B 2103/63,
C04B 2103/67, C04B 2103/0082, C04B 2103/408**

## Description

The present invention relates to a method for the manufacture of a moisture-resistant plasterboard using a combination of silicone and ketene dimer as hydrophobing agent, to a moisture-resistant plasterboard made by such method and to a gypsum composition suitable for implementing such method.

Plasterboards are panels comprising a layer of gypsum between two facing sheets generally made of a paper liner. Industrially, the method for the manufacture of plasterboards comprises three main stages: the forming, the setting and the drying. During the stage of forming of the plasterboard, a slurry is continuously prepared in a mixer starting from stucco, water and other specific ingredients in order to adjust the properties of the composition and/or of the final product. For instance, a foaming agent is sometimes added in the gypsum slurry to decrease the density of the resulting plasterboard. The composition is subsequently cast continuously over a first liner entrained by a conveyor belt in order to form the board. After the edges of the first liner have been folded over, a second liner is introduced. Usually, an extruder is used to flatten the second liner over the composition, smooth the surfaces and adjust the thickness of the plasterboard to the desired value. In some processes, an additional gypsum layer, called roller coating, can be inserted between the first liner and the main gypsum core, and another one usually also between the second liner and the main gypsum core. Such roller coatings usually have a density greater than that of the main gypsum core and allow an enhancement of the mechanical properties of the plasterboard.

In order to impart moisture resistance to the plasterboards, it is commonly known to add a silicone in the gypsum slurry. Such silicone has however several drawbacks, such as cyclic shortages, defoaming effect, and formation of silica dust in the dryer. Silica dust represents a waste of silicone but it also decreases the dryer efficiency, since the accumulation of silica dust leads to hard deposits in the dryer apertures; consequently, jet nozzles in the prezone and blowing nozzles in the rest of the zones can get clogged leading to a decrease of the performance of the dryer and a significant increase in energy consumption and maintenance frequencies/costs.

Ketene dimers have more recently been described as alternative hydrophobing agent in plasterboards. However, high amounts of such ingredient are necessary to reach a high moisture resistance.

Therefore, there remains a need to provide a method that allows to reduce the amount of silicone used in plasterboards, while maintaining high performances of moisture resistance.

SUMMARY

In this context, the inventors have discovered that such need could be satisfied by combining silicone and ketene dimers. Indeed, an unexpected synergistic effect was observed with such combination, such that a reduced amount of silicone and a moderate amount of ketene dimer could be used to obtain high performances of moisture resistance.

Thus, the present invention relates to a method for the manufacture of a moisture-resistant plasterboard, comprising :

- providing a composition comprising water, stucco, a silicone and a ketene dimer,
- casting the composition on a first liner, so as to form a wet gypsum layer on said first liner,
- providing a second liner on said wet gypsum layer, thereby forming a wet plasterboard, and
- drying the wet plasterboard, so as to form the plasterboard,

wherein the weight ratio of silicone to ketene dimer in said composition is from 1/50 to 1/1.

In some embodiments, the weight ratio of silicone to ketene dimer in the composition is from 1/40 to 1/1, for instance from 1/35 to 1/1, from 1/30 to 1/1, or from 1/25 to 1/1.

In some embodiments, the weight ratio of silicone to ketene dimer in the composition is from 1/20 to 1/1, for instance from 1/15 to 1/1, from 1/12 to 1/1, from 1/20 to 1/2, from 1/15 to 1/3, from 1/12 to 1/4, or from 1/10 to 1/4.

In some embodiments, the weight content of silicone is from 0.05 to 1.5%, for instance: from 0.05 to 0.5%, from 0.05 to 0.15%, from 0.07 to 1.4%, from 0.07 to 0.5%, from 0.07 to 0.15%, from 0.1 to 1.3%, from 0.1 to 1.2%, from 0.1 to 1.0%, for instance from 0.1 to 0.5% relative to dry weight of stucco.

In some embodiments, the weight content of ketene dimer is from 0.1 to 3%, for instance: from 0.1 to 1.5%, from 0.2 to 1.2%, or from 0.3 to 1%, relative to dry weight of stucco.

In some embodiments, the total weight content of ketene dimer and silicone is from 0.15 to 5%, for instance: from 0.25 to 3%, from 0.3 to 2%, from 0.3 to 1.5%, or from 0.3 to 1.2%, relative to dry weight of stucco.

In some embodiments, the ketene dimer is a compound of formula (I), of formula (II), or a mixture thereof:

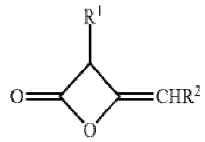 (I) 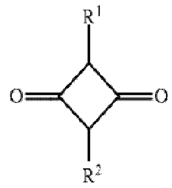 (II),

in which, in each of formulae (I) and (II), $R^1$ and $R^2$ are each independently a C6-C30 hydrocarbon radical, preferably a C8-C26 hydrocarbon radical, more preferably a C12-C24 hydrocarbon radical, even more preferably a C14-C18 hydrocarbon radical.

In some embodiments, the silicone is polymethylhydrosiloxane (PMHS).

In some embodiments, the weight ratio of water to stucco in the composition is:

- at least 0.19, and
- at most 1, preferably at most 0.85, more preferably at most 0.80, even more preferably at most 0.75.

In some embodiments, the composition further comprises one or more ingredients selected from dispersants, adhesion agents, setting accelerators, setting retarders, anti-burning agents, anti-sag agents, fire-resistant agents, anti-shrinkage agents, biocidal agents, and reinforcing agents.

In some embodiments, each of the first and second liners is, independently from each other, a paper liner, a cardboard liner, or a glass veil, preferably both are paper liners.

The present invention also relates to a moisture-resistant plasterboard made by a method as defined herein.

The present invention also relates to a composition comprising:

- water,
- stucco,
- a silicone and
- a ketene dimer,

wherein the weight ratio of silicone to ketene dimer in the composition is from 1/50 to 1/1.

DETAILED DESCRIPTION

The present invention is based on the use of a particular combination of hydrophobing agents in a composition (which may be also called herein "slurry") for manufacturing a plasterboard.

More particularly, the present invention provides a composition which comprises:

- water,
- stucco,
- a silicone and
- a ketene dimer.

As used herein, the term "gypsum" encompasses:

- calcium sulphate dihydrate ($CaSO_4$, $2H_2O$), which corresponds to a set gypsum,
- calcium sulphate hemihydrate ($CaSO_4$, ½ $H_2O$), which corresponds to a non-set gypsum (also called "gypsum hemihydrate" or "plaster"), and/or
- a mixture thereof, which in particular corresponds to a gypsum which is not completely set.

As used herein, the term "stucco" refers to any natural or synthetic stucco, which consists of - or essentially consists of - calcium sulphate hemihydrate ($CaSO_4$, ½ $H_2O$).

Calcium sulphate hemihydrate can be alpha calcium sulfate hemihydrate ("α-hemihydrate") or beta calcium sulfate hemihydrate ("β-hemihydrate"), preferably beta calcium sulfate hemihydrate.

Alpha calcium sulfate hemihydrate is produced by calcination of gypsum in an atmosphere saturated with water vapor, and beta calcium sulfate hemihydrate is produced under conditions where the partial pressure of water vapor is low.

The expression "plasterboard" (or equivalently: "gypsum-based panel" or "gypsum board" or "drywall") denotes for example the finished product formed by set gypsum but also a plasterboard in the course of manufacture in which the

gypsum is not completely set.

Advantageously, the content of stucco in the composition is at least 70 wt% (for instance at least 80 wt%, at least 90 wt%, at least 95 wt% or at least 98 wt%), relative to the total dry content of the composition.

Advantageously, the weight ratio of water to stucco (such ratio being also named "water gauge") in the composition is:

- at least 0.19, for instance at least 0.30, at least 0.40, or at least 0.50; and
- preferably at most 1, more preferably at most 0.85, even more preferably at most 0.80, for instance at most 0.75, or even at most 0.60.

In a particular embodiment, the weight ratio of water to stucco in the composition is from 0.45 to 0.85, preferably from 0.55 to 0.80, more preferably from 0.65 to 0.75.

The composition comprises a combination of a silicone and a ketene dimer as hydrophobing agents. A synergistic effect is advantageously observed when such compounds are used in combination.

The weight ratio of silicone to ketene dimer in the composition is from 1/50 to 1/1, for instance: from 1/40 to 1/1, from 1/35 to 1/1, from 1/30 to 1/1, from 1/25 to 1/1, from 1/20 to 1/1, from 1/15 to 1/1, from 1/12 to 1/1, from 1/20 to 1/2, from 1/15 to 1/3, from 1/12 to 1/4, or from 1/10 to 1/4.

The combination of hydrophobing agents allows reducing the amount of silicone used in the composition, for a given moisture-resistance performance.

The weight content of silicone is advantageously from 0.05 to 1.5% (for instance from 0.05 to 0.5%, or from 0.05 to 0.15%), preferably from 0.07 to 1.4% (for instance from 0.07 to 0.5%, or from 0.07 to 0.15%), more preferably from 0.1 to 1.3%, even more preferably from 0.1 to 1.2%, in particular from 0.1 to 1.0%, for instance from 0.1 to 0.5%, relative to dry weight of stucco. The weight content of ketene dimer (based on dry extract) is advantageously from 0.1 to 3%, 0.1 to 1.5%, preferably from 0.2 to 1.2%, more preferably from 0.3 to 1%, relative to dry weight of stucco.

Advantageously, the total weight content of ketene dimer and silicone (based on dry extract) is from 0.15 to 5%, preferably from 0.25 to 3%, more preferably from 0.3 to 2%, in particular from 0.3 to 1.5%, for instance from 0.3 to 1.2%, relative to dry weight of stucco.

In the present application, unless otherwise mentioned, the weight content of a component (or a weight ratio of components) is based on the weight of the component itself, and therefore, to its weight in dry extract, when used for instance diluted in a dispersion or solution.

As used herein, the term "silicone" typically refers to a siloxane or polysiloxanes compound. Preferably, the silicone is chosen among polyalkylhydrogenosiloxanes. Polyalkylhydrogenosiloxanes are well-known to the skilled artisan and are in particular described in US 5,135,805, US 5,624,418 or WO 99/50200. Polyalkylhydrogenosiloxanes can in particular comprise the following repeating unit:

-[SiH(R')-O]- wherein R' is a C1-C4 alkyl such as a methyl. More preferably, the silicone is chosen among polymethylhydrosiloxanes (PMHS).

Unless otherwise specified, the word "silicone" as used herein refers to a non-cross-linked silicone, or a partially cross-linked silicone. In particular, when referring to the silicone present in the composition, such silicone is not cross-linked and starts cross-linking once in contact with water during implementation of the method of the invention.

As used herein, a "ketene dimer" refers to a dimer of a ketene, wherein a ketene is a compound comprising a group of formula =C=O.

The ketene dimer may in particular be an alkyl ketene dimer (wherein said alkyl is advantageously in C6-C30, preferably in C8-C26, more preferably in C12-C24, even more preferably in C14-C18).

The ketene dimer may in particular be a compound of formula (I), of formula (II), or a mixture thereof:

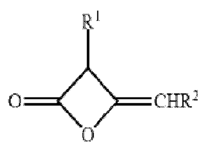

(I)

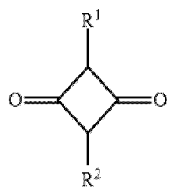

(II),

in which, in each of formulae (I) and (II), $R^1$ and $R^2$ are each independently a C6-C30 hydrocarbon radical, preferably a C8-C26 hydrocarbon radical, more preferably a C12-C24 hydrocarbon radical, even more preferably a C14-C18 hydrocarbon radical.

Said "hydrocarbon radical" may be:

- saturated or unsaturated (preferably saturated),
- linear or branched (preferably linear), and
- cyclic or acyclic (preferably acyclic).

R1 and R2 may, for instance, be each independently chosen from the following groups: octyl, decyl, dodecyl, tetradecyl, hexadecyl, octadecyl, eicosyl, docosyl, tetracosyl, phenyl, benzyl, β-naphthyl and cyclohexyl.

Ketene dimers are well-known to the skilled artisan and are in particular described in US 5,135,805.

The composition described herein may comprise further ingredients, in particular to tune the physico-chemical properties of the composition and/or of the plasterboard.

Examples of such ingredients include, but are not limited to, dispersants, adhesion agents, setting accelerators, setting retarders, anti-burning agents, anti-sag agents, fire-resistant agents, anti-shrinkage agents, biocidal agents, and reinforcing agents.

Examples of adhesion agents include in particular, starches such as acid-hydrolyzed or pregelatinized starches, polyvinyl acetate, polyvinyl alcohol, dextrins, or a flour such as corn, wheat or sorghum flour.

Examples of dispersants include in particular, polynaphthalene sulfonate, polycarboxylate ether, or polyaryl ether.

Examples of setting accelerators include in particular heat resistant accelerator, such as ground gypsum encapsuled within dextrose monohydrate.

Examples of setting retarders include in particular natural proteins.

An example of anti-burning agent includes in particular dextrose monohydrate.

Examples of anti-sag agents include in particular sodium trimetaphosphate or tartaric acid. Examples of fire-resistant agents include in particular vermiculite, clay, glass fibers or mineral wool (e.g. glass wool).

Examples of anti-shrinkage agents include in particular vermiculite, clay, or microsilica. Examples of biocidal agents include in particular carbamates, such as 3-iodoprop-2-yn-1-yl butylcarbamate, or pyrothione complexes.

Examples of reinforcing agents include in particular glass fibers.

The composition described herein is typically formed by mixing all the components of the composition (stucco, water, silicone, ketene dimer, and the optional further ingredients).

The composition described herein is particularly suitable for being used as a slurry in a method for manufacturing a moisture-resistant plasterboard.

Hence, an object of the present invention is a method for the manufacture of a moisture-resistant plasterboard, comprising:

- providing a composition as defined herein,
- casting the composition on a first liner, so as to form a wet gypsum layer on said first liner,
- providing a second liner on said wet gypsum layer, thereby forming a wet plasterboard, and
- drying the wet plasterboard, so as to form the moisture-resistant plasterboard.

In the present application, the word "band" or "facing sheet" may be equivalently used instead of "liner". Each of the first and second liners is usually, independently from each other, a paper liner, a cardboard liner, or a glass veil, preferably both are paper liners.

In the method of the invention, the setting of the gypsum usually takes place as soon as the composition is formed and cast on the first liner. Typically, in said "wet gypsum layer", the gypsum is not completely set (i.e. the wet gypsum layer comprises a mixture of calcium sulphate dihydrate and calcium sulphate hemihydrate and water). During the setting, calcium sulphate hemihydrate and water contained in the composition react with each other to form calcium sulphate dihydrate. Such reaction is a hydration reaction.

The setting typically occurs in the absence of external heating, in particular at room temperature. Room temperature typically refers to a temperature comprised between 15°C and 35°C. Since the reaction between calcium sulphate hemihydrate and water is exothermic, the temperature of the wet gypsum layer during setting can be above room temperature.

The setting is usually completed just before the drying step. Typically, the wet plasterboard comprises a layer of set gypsum and the water in excess (or "unreacted water").

During the drying step of the method, the water in excess (or "unreacted water") is removed. The drying step is advantageously carried out at a temperature comprised between 85°C and 97°C, more particularly between 90 °C and 95 °C. Such temperature in the drying step refers to the temperature as measured in the gypsum layer of the plasterboard. A dry gypsum layer, comprising a dry set gypsum, is obtained after such step.

Preferably, the method of the invention is carried out under continuous conditions. Under such continuous conditions, the method of the invention typically comprises the following steps:

- continuously preparing a composition as defined herein in a mixer;
- continuously casting the composition from the mixer on a first liner, so as to form a wet gypsum layer on said first liner, wherein the first liner is entrained by a conveyor belt (for instance, towards an extruder),
- continuously providing a second liner on the wet gypsum layer (for instance, at the extruder), thereby forming a continuous wet plasterboard, and
- cutting and drying the continuous wet plasterboard, so as to obtain a plasterboard.

When used, the extruder allows to flatten the second liner over the composition, to smooth the surfaces and adjusts the thickness of the plasterboard to the desired value.
In some embodiments, the method of the invention further comprises forming a dense gypsum layer (also called "roller coating") between the first liner and the gypsum layer (also called "main gypsum layer"), and optionally between the second liner and the gypsum layer (also called "main gypsum layer").
In such embodiments, the method of the invention may typically comprise the following steps:

- providing a first composition comprising stucco and water,
- providing a second composition comprising stucco and water,
- casting said first composition on a first liner, so as to form a first wet roller coating,
- casting said second composition on the first roller coating, so as to form a wet main gypsum layer,
- providing a second liner, optionally coated with a second wet roller coating, on said wet main gypsum layer, thereby forming a wet plasterboard, and
- drying the wet plasterboard, so as to form the plasterboard,

wherein, when present, said second wet roller coating is formed by casting a third composition comprising water and stucco on said second liner,
wherein at least one of the first, second (and third, when present) compositions is a composition as defined herein.

Preferably, said first (and third if present) composition is a composition as defined herein.
In such method, the density of each of the first and third (when present) gypsum layer is typically higher than the density of the second gypsum layer (preferably, higher by at least 5%, and usually by at most 40%, for instance by 15 to 25%).
In some embodiments, said second composition further comprises a foaming agent (such as an alkyl sulfate or alkyl ether sulfate).
The present invention also relates to a moisture-resistant plasterboard made by a method as defined herein.
The present invention also relates to a moisture-resistant plasterboard comprising at least one gypsum layer (preferably exactly one gypsum layer), which is based on (or obtained from) a composition as defined herein, said gypsum layer being between a first liner and a second liner.
More particularly, a gypsum layer based on (or obtained from) a composition as defined herein typically comprises:

- set gypsum (more particularly dry set gypsum),
- a cross-linked silicone, and
- a ketene dimer or derivatives thereof,

wherein the weight ratio (cross-linked silicone) / (ketene dimer and derivatives thereof) in the gypsum layer is from 1/50 to 1/1, for instance: from 1/40 to 1/1, from 1/35 to 1/1, from 1/30 to 1/1, from 1/25 to 1/1, from 1/20 to 1/1, from 1/15 to 1/1, from 1/12 to 1/1, from 1/20 to 1/2, from 1/15 to 1/3, from 1/12 to 1/4, or from 1/10 to 1/4.
In said gypsum layer, the weight content of cross-linked silicone is advantageously from 0.05 to 1.5% (for instance from 0.05 to 0.5%, or from 0.05 to 0.15%), preferably from 0.07 to 1.4% (for instance from 0.07 to 0.5%, or from 0.07 to 0.15%), more preferably from 0.1 to 1.3%, even more preferably from 0.1 to 1.2%, in particular from 0.1 to 1.0%, for instance from 0.1 to 0.5%, relative to dry weight of gypsum.
In said gypsum layer, the weight content of ketene dimer and derivatives thereof is advantageously from 0.1 to 3%, 0.1 to 1.5%, preferably from 0.2 to 1.2%, more preferably from 0.3 to 1%, relative to dry weight of gypsum.
In said gypsum layer, the total weight content of ketene dimer, derivatives thereof, and cross-linked silicone is advantageously from 0.15 to 5%, preferably from 0.25 to 3%, more preferably from 0.3 to 2%, in particular from 0.3 to 1.5%, for instance from 0.3 to 1.2%, relative to dry weight of gypsum.
Said "derivative of ketene dimer" refers in particular to a hydrolyzed form of ketene dimer or to a product of reaction between silicone and ketene dimer.
Said "cross-linked silicone" refers to the product obtained from the cross-linking of silicone (e.g. PMHS) in the

aqueous slurry upon formation of the plasterboard.

Preferably, the density of said gypsum layer is advantageously from 250 kg/m3 to 1600 kg/m3, for instance: from 400 kg/m3 to 1500 kg/m3, from 800 to 1200 kg/m3, from 1000 to 1200 kg/m3, or from 600 to 1000 kg/m3.

Typically, the thickness of said gypsum layer is from 5 mm to 25.5 mm, preferably from 6.5 mm to 12.5 mm.

In a particular embodiment, the moisture-resistant plasterboard of the invention (or made by a method of the invention) comprises:

- a first liner,
- a first gypsum layer on the first liner,
- a second gypsum layer on the first gypsum layer,
- optionally a third gypsum layer on the second gypsum layer,
- a second liner on the second (or third, when present) gypsum layer,

wherein at least one of said first, second and third (when present) is based on (or obtained from) a composition as defined herein.

Preferably said first (and third, if present) gypsum layer is based on (or obtained from) a composition as defined herein.

Preferably, the density of each of said first (and third when present) gypsum layer is higher than the density of the second gypsum layer (preferably, higher by at least 5%, and usually by at most 40%, for instance by 15 to 25%).

Advantageously:

- the density of each of the first and third (when present) gypsum layer is independently from 800 kg/m3 to 1600 kg/m3, preferably from 900 kg/m3 to 1200 kg/m3; and
- the density of the second gypsum layer is from 250 kg/m3 to 1150 kg/m3, preferably from 400 kg/m3 to 960 kg/m3.

Typically, the thickness of said first gypsum layer is from 0.3 mm to 1.2 mm, preferably from 0.5 mm to 1 mm. Typically, the thickness of said second gypsum layer is from 5 mm to 25.5 mm, preferably from 6.5 mm to 12.4 mm. Typically, the thickness of said third gypsum layer is from 0.3 mm to 1.2 mm, preferably from 0.5 mm to 1 mm.

The present invention is illustrated by the following non-limiting examples.

EXAMPLES

*Slurry composition and preparation, prism molding*

The slurry is composed of the following ingredients:

- stucco ($CaSO_4.½H_2O$),
- water, with a weight ratio water stucco of 0.6,
- 0.1 wt% of heat resistant accelerator based on the dry weight of stucco,
- 0.02 wt% of retarder, based on the dry weight of stucco,
- 0.5 wt% of starch, based on the dry weight of stucco, and
- a quantity of silicone oil - polymethylhydroxysiloxane (PMHS) - and ketene dimer dispersion (AKD) to reach weight content described in the corresponding examples (based on dry extract). The stucco amount used for the slurry preparation was 500 g.

The ingredients of the composition were mixed and vigorously stirred in a blender to form a slurry and the resulting slurry was immediately poured into silicone molds of dimensions 10*2*2 cm in order to obtained 5 prisms per recipe.

After 30 minutes of stiffening, prisms were unmolded, wrapped in a thermic resistant scotch tape and put in vapor saturated oven set at 180°C for 30 minutes. A second drying was carried out at 40°C for 24 hours.

*Total water absorption tests*

Prior to the total water absorption (TWA) tests, the prisms were conditioned according to EN 520 (23°C, 50% RH) until constant weight. The prisms were immersed for 2 h in water (25°C) with at least 2.5 cm of water below and above.

The water absorption corresponding to a mass variation is expressed in % and computed as followed:

$$\frac{Mass\ after\ 2h - Initial\ Mass}{Initial\ Mass} \times 100$$

Table 1

| Ex. | Ratio PMHS/AKD | PMHS (wt%) | AKD (wt%) | TWA (%) |
|---|---|---|---|---|
| 1 (Comp.) | - | 0.1 | - | 15.7 |
| 2 (Comp.) | - | - | 0.5 | 17.8 |
| **3** | 1/5 | 0.1 | 0.5 | **2.4** |
| 4 (Comp.) | - | 0.05 | - | 25.8 |
| 5 (Comp.) | - | - | 0.55 | 17.2 |
| **6** | 1/11 | 0.05 | 0.55 | **3.1** |

Results of Table 1 demonstrate that a synergistic effect, in terms of moisture resistance, is obtained when combining a silicone and a ketene dimer.

**Claims**

1. A method for the manufacture of a moisture-resistant plasterboard, comprising :

   - providing a composition comprising water, stucco, a silicone and a ketene dimer,
   - casting the composition on a first liner, so as to form a wet gypsum layer on said first liner,
   - providing a second liner on said wet gypsum layer, thereby forming a wet plasterboard, and
   - drying the wet plasterboard, so as to form the plasterboard,

   wherein the weight ratio of silicone to ketene dimer in said composition is from 1/50 to 1/1.

2. The method according to claim 1, wherein the weight ratio of silicone to ketene dimer in the composition is from 1/40 to 1/1, for instance from 1/35 to 1/1, from 1/30 to 1/1, or from 1/25 to 1/1.

3. The method according to claim 1 or 2, wherein the weight ratio of silicone to ketene dimer in the composition is from 1/20 to 1/1, for instance from 1/15 to 1/1, from 1/12 to 1/1, from 1/20 to 1/2, from 1/15 to 1/3, from 1/12 to 1/4, or from 1/10 to 1/4.

4. The method according to any one of claims 1 to 3, wherein the weight content of silicone is from 0.05 to 1.5%, for instance: from 0.05 to 0.5%, from 0.05 to 0.15%, from 0.07 to 1.4%, from 0.07 to 0.5%, from 0.07 to 0.15%, from 0.1 to 1.3%, from 0.1 to 1.2%, from 0.1 to 1.0%, for instance from 0.1 to 0.5% relative to dry weight of stucco.

5. The method according to any one of claims 1 to 4, wherein the weight content of ketene dimer is from 0.1 to 3%, for instance: from 0.1 to 1.5%, from 0.2 to 1.2%, or from 0.3 to 1%, relative to dry weight of stucco.

6. The method according to any one of claims 1 to 5, wherein the total weight content of ketene dimer and silicone is from 0.15 to 5%, for instance: from 0.25 to 3%, from 0.3 to 2%, from 0.3 to 1.5%, or from 0.3 to 1.2%, relative to dry weight of stucco.

7. The method according to any one of claims 1 to 6, wherein the ketene dimer is a compound of formula (I), of formula (II), or a mixture thereof:

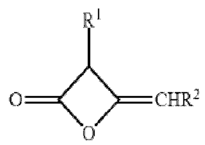 (I) 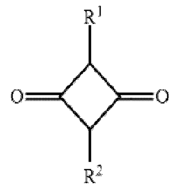 (II),

in which, in each of formulae (I) and (II), $R^1$ and $R^2$ are each independently a C6-C30 hydrocarbon radical, preferably a C8-C26 hydrocarbon radical, more preferably a C12-C24 hydrocarbon radical, even more preferably a C14-C18 hydrocarbon radical.

**8.** The method according to any one of claims 1 to 7, wherein the silicone is polymethylhydrosiloxane (PMHS).

**9.** The method according to any one of claims 1 to 8, wherein the weight ratio of water to stucco in the composition is:

- at least 0.19, and
- at most 1, preferably at most 0.85, more preferably at most 0.80, even more preferably at most 0.75.

**10.** The method according to any one of claims 1 to 9, wherein the composition further comprises one or more ingredients selected from dispersants, adhesion agents, setting accelerators, setting retarders, anti-burning agents, anti-sag agents, fire-resistant agents, anti-shrinkage agents, biocidal agents, and reinforcing agents.

**11.** The method according to any one of claims 1 to 10, wherein each of the first and second liners is, independently from each other, a paper liner, a cardboard liner, or a glass veil, preferably both are paper liners.

**12.** A moisture-resistant plasterboard made by a method as defined in any one of claims 1 to 11.

**13.** A composition comprising:

- water,
- stucco,
- a silicone and
- a ketene dimer,

wherein the weight ratio of silicone to ketene dimer in the composition is from 1/50 to 1/1.

Europäisches Patentamt
European Patent Office
Office européen des brevets

# EUROPEAN SEARCH REPORT

Application Number
EP 24 30 6595

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2016/062867 A1 (BASF SE [DE]) 28 April 2016 (2016-04-28) * the whole document * ----- | 1-13 | INV. C04B28/14 |
| | | | TECHNICAL FIELDS SEARCHED (IPC) |
| | | | C04B |

The present search report has been drawn up for all claims

1

| Place of search | Date of completion of the search | Examiner |
|---|---|---|
| Munich | 10 February 2025 | Gattinger, Irene |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 30 6595

This annex lists the patent family members relating to the patent documents cited in the above-mentioned European search report. The members are as contained in the European Patent Office EDP file on
The European Patent Office is in no way liable for these particulars which are merely given for the purpose of information.

10-02-2025

| Patent document cited in search report | Publication date | Patent family member(s) | Publication date |
|---|---|---|---|
| WO 2016062867 A1 | 28-04-2016 | AU 2015334858 A1 | 11-05-2017 |
| | | BR 112017008213 A2 | 26-12-2017 |
| | | CA 2965440 A1 | 28-04-2016 |
| | | CN 107074670 A | 18-08-2017 |
| | | EP 3209625 A1 | 30-08-2017 |
| | | JP 2017534728 A | 24-11-2017 |
| | | RU 2017117606 A | 23-11-2018 |
| | | US 2017240467 A1 | 24-08-2017 |
| | | WO 2016062867 A1 | 28-04-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5135805 A
- US 5624418 A
- WO 9950200 A